# EUROPÄISCHE PATENTSCHRIFT

(11) **EP 1 369 539 B1**
(45) Veröffentlichungstag und Bekanntmachung des Hinweises auf die Patenterteilung: **31.10.2007**
(21) Anmeldenummer: 03005865.5
(22) Anmeldetag: 15.03.2003
(51) Int. Cl.: E04B 1/74, C04B 28/02, C04B 18/26

(54) **Bauprodukt**
Construction product
Produit pour la construction

(30) Priorität: 04.06.2002 DE 10224639
(43) Veröffentlichungstag der Anmeldung: 10.12.2003
(73) Patentinhaber: Heraklith GmbH, 9586 Fürnitz (AT)
(72) Erfinder: Hermann, Dietmar, 9871 Seeboden (AT); Neuherz, Willibald, Dr., 9702 Ferndorf (AT)
(74) Vertreter: Becker, Thomas

(56) Entgegenhaltungen:
- CH-A- 259 770
- DD-A- 20 750
- DE-A- 2 532 581
- DE-A- 4 327 452
- DE-A- 7 007 347
- DE-A- 19 539 309
- DE-B- 1 117 467
- DE-C- 477 365
- GB-A- 235 057
- GB-A- 497 621
- GB-A- 682 142
- US-A- 1 986 692
- US-A- 2 060 295
- US-A- 2 511 904
- PANOV V P ET AL: "COMPOSITION FOR PRODUCING HEAT-INSULATING DRY PLASTER" CHEMICAL ABSTRACTS + INDEXES, AMERICAN CHEMICAL SOCIETY. COLUMBUS, US, Bd. 104, Nr. 26, 30. Juni 1986 (1986-06-30), Seite 298, XP000064595 ISSN: 0009-2258

## Beschreibung

Die Erfindung betrifft ein Bauprodukt (ausgenommen Bodenbeläge), welches nach prEN 13501-1 (europäischer Normentwurf) klassifiziert werden kann.

Dieser Normentwurf enthält durch Verweisungen Festlegungen aus anderen Publikationen, auf die inhaltlich Bezug genommen wird. Dies gilt insbesondere für den Normentwurf prEN ISO 1716 ("Prüfungen zum Brandverhalten von Bauprodukten").

Das Bauprodukt kann ein homogenes Bauprodukt sein, das durchweg aus einem einzigen Stoff gleicher Dichte und Zusammensetzung besteht, oder ein nichthomogenes Bauprodukt, das so definiert ist, dass es die Anforderungen an ein homogenes Bauprodukt nicht erfüllt.

Die Erfindung richtet sich auf beide Arten von Bauprodukten, jedoch mit folgender Prämisse:
Es werden nur solche homogenen Bauprodukte erfaßt, die Holzwollefasern aufweisen, die mit einem anorganischen Bindemittel wechselseitig fixiert sind und insgesamt eine offenporige Struktur ausbilden. Nichthomogene Bauprodukte müssen mindestens einen substantiellen Bestandteil aufweisen, der analog zu dem zuvor genannten homogenen Bauprodukt gebildet ist.

Nach dem genannten Normentwurf handelt es sich bei einem substantiellen Bestandteil um einen bedeutenden Anteil eines nichthomogenen Bauproduktes, insbesondere eine Schicht mit einem Verhältnis von Masse zu Fläche von > = 1,0 kg/m² oder einer Dicke von > = 1,0 mm. Beide Anforderungen werden von sogenannten Holzwolle-Leichtbauschichten (also mittels eines Bindemittels gebundene Holzwollefasern) ohne weiteres erreicht.

Holzwolle-Leichtbauelemente nach dem Stand der Technik sind seit über 100 Jahren bekannt und werden von der Anmelderin unter der Marke "HERAKLITH" vertrieben.

Die Rohdichte der bekannten HWL-Elemente beträgt üblicherweise bis 350 kg/m³, je nach dem Volumenanteil an Freiräumen zwischen den Feststoffanteilen des Bauproduktes. Die Holzwollefasern weisen üblicherweise eine Länge von mehr als 8 cm, eine Breite von 1 bis 5 mm und eine Dicke von 0,2 bis 0,5 mm auf. Neben dem Gesamtanteil an offener Porosität innerhalb des Bauproduktes (üblicherweise einer Platte) weist auch die einzelne Holzfaser eine erhebliche offene (Mikro)Porosität (sogenannte Zellen) auf. Der Gesamtanteil an offener Porosität innerhalb des Produktes kann beispielsweise zwischen 50 und 80 Vol.-% betragen.

Die Verbindung der Fasern mit Hilfe des genannten Bindemittels läßt sich auf unterschiedliche Weise erreichen. Durch eine "Inkrustierung" der Fasern mit dem Bindemittel, also eine Art Oberflächenbeschichtung, kann der Bindemittelanteil gering gehalten werden (DE 4327 452 A1). Kombinationen solcher Leichtbauplatten mit einer Glasfaser-Auflage ergeben sich aus der DE 70 07 347 U1. Bauprodukte, die Holzwolle und Zement enthalten, sind auch aus der GB 682,142 bekannt. Eisenmetall wird als weitere Komponente zugegeben. Die Bauprodukte werden unter Druck ausgehärtet.

Ein wichtiges Kriterium ist das Brandverhalten eines solchen Bauproduktes.

Mit der Erfindung soll eine Möglichkeit aufgezeigt werden, das Bauprodukt so zu gestalten, dass es die europäische Brandschutzklasse A2 gemäß den genannten Normentwürfen erfüllt.

Der Erfindung liegt die Erkenntnis zugrunde, dass dieses Ziel durch eine Veränderung der Masseanteile Holzwollefasern/Nicht-Holzwollefasern (der Begriff Nicht-Holzwollefasern umfasst alle Komponenten des Bauproduktes, die nicht Holzwolle sind, also 100 %-Holzwollefasern) erreicht werden kann, wobei es allerdings nicht zielführend ist, lediglich das Verhältnis Holzwollefasern/Bindemittel hin zu einem höheren Bindemittelanteil zu verändern. Ein solches Bauprodukt oder ein solcher substantieller Bestandteil eines Bauproduktes wäre verfahrenstechnisch nicht herstellbar.

Die Erfindung geht weiter und schlägt ein Bauprodukt gemäß Anspruch 1 vor.

Das genannte Masseverhältnis kann nach Ausführungsformen > 1 : 4,5 oder > 1 : 5,0 betragen.

Der Zuschlagstoff kann in pulverförmiger bis körniger Aufbereitung eingebracht werden. Geeignete Zuschlagstoffe sind: Quarzsand, geblähter Perlit, ungeblähter Perlit, geblähter Vermiculit, ungeblähter Vermiculit, Kalkstein, gebrannter Ton, gebrannte Tonminerale, Blähton, wobei diese Produkte einzeln oder in beliebiger Kombination verwendet werden können. Die Zuschläge können auch in Kombination mit einem Bindemittel eingesetzt werden. Zum Beispiel kann man den Zuschlag mit Bindemittel umhüllen.

Ebenso ist es möglich, den Bindemittelanteil gegenüber konventionellen Holzwolle-Leichtbauprodukten so zu erhöhen, dass die Verarbeitbarkeit (Vermischung mit den Holzwollefasern und weiteren Bestandteilen) weiter gesichert ist, das Bauprodukt beziehungsweise der substantielle Bestandteil jedoch einen Brennwert zeigt, der unterhalb des maximalen Grenzwertes für A2-Produkte liegt.

Mit anderen Worten: die Abstimmung der Masseanteile Holzwollefasern, anorganisches Bindemittel, weitere Bestandteile, insbesondere anorganische Zuschlagstoffe, hat sich an der jeweiligen Brutto-Verbrennungswärme (Brennwert) zu orientieren. Dies soll an einem Beispiel verdeutlicht werden:
Bei einer konventionellen Holzwolle-Leichtbauplatte (aus Holzwollefasern und magnesitischem Bindemittel) mit einer Dicke von 25 mm liegt der Brennwert bei ca. 5 MJ/kg. Das Masseverhältnis Holzwollefasern : Bindemittel liegt typischerweise bei 1 3,5 bis 1 4,5.

Um die gewünschte Brandschutzklasse A2 zu erreichen, kann beispielsweise der Bindemittelanteil um relativ 20 bis 50 % erhöht werden; durch die gleichzeitige Zugabe von geblähtem Perlit kann das Masseverhältnis Holzwollefasern : Nicht-Holzwollefasern im Ergebnis nahezu unverändert gehalten werden. Durch den erhöhten Bindemittelanteil und den Anteil an geblähtem Perlit beträgt der Brennwert einer 25 mm starken Bauplatte jedoch weniger als 3 MJ/kg.

Alternativ könnte sogar daran gedacht werden, den Bindemittelanteil im Verhältnis zu konventionellen Holzwolle-Leichtbauelementen zu senken und dafür einen relativ schweren Zuschlagstoff wie Kalkstein (Kalksteinmehl) in größerer Menge zuzugeben.

Die weiteren Komponenten können beispielsweise bei der Aufbereitung des Bindemittels eingemischt werden. Zum Zweck einer optimierten anschließenden Verteilung/Vermischung mit den Holzwollefasern wird nach einer Ausführungsform vorgeschlagen, die Zuschlagstoffe in einer Körnung einzusetzen, deren mittlerer Durchmesser (d₅₀) < 1,0 mm, nach einer weiteren Ausführungsform < 0,5 mm beträgt.

Wie ausgeführt umfaßt die Erfindung homogene Bauprodukte, die vollständig auf die beschriebene Art und Weise (homogen) gebildet sind. Die Erfindung umfaßt aber auch Bauprodukte, bei denen lediglich ein substantieller Bestandteil (eine Schicht oder Zone) auf die beschriebene Art und Weise gestaltet ist. Zu der letztgenannten Gruppe gehören beispielsweise Bauprodukte, die neben dem, Holzfasern enthaltenden substantiellen Bestandteil mindestens einen weiteren substantiellen Bestandteil aufweisen, beispielsweise eine Mineralfaser-Zone/Mineralfaser-Schicht.

Dabei kann die Mineralfaserschicht ein- oder beidseitig von Schichten belegt sein, wie sie zuvor beschrieben wurden.

Es ist ebenso möglich, diese nichthomogenen Bauprodukte (Verbundkörper) durch sogenannte nicht substantielle Bestandteile zusätzlich zu ergänzen, beispielsweise durch dünne Deck- oder Zwischenschichten, beispielsweise aus einem Glasvlies.

Auf diese Weise lassen sich thermische und/oder akustische Eigenschaften des Bauproduktes in gewünschter Weise verändern.

Der nicht substantielle Bestandteil kann auch aus einem Farbauftrag bestehen, beispielsweise um das Produkt hinsichtlich seines Brandverhaltens kenntlich zu machen.

Eine weitere Abwandlung des Erfindungsgedankens sieht vor, als weitere Komponente Fasermaterialien einzusetzen, beispielsweise Recyclingfasern, wie sie bei der Mineralfaserherstellung anfallen. Auch diese erfüllen eine Art "Zuschlagfunktion", gleichzeitig eine Art "Armierungsfunktion" innerhalb des Bindemittels. Sie lassen sich ebenfalls bei der Aufbereitung des Bindemittels (nach dem Anmischen mit Wasser) im Bindemittel verteilen und anschließend auf die Holzwollefasern auftragen.

Insgesamt soll die entsprechende, Holzwollefasern enthaltende Zone beziehungsweise bei einem homogenen Bauprodukt dieses insgesamt eine offene Porosität aufweisen.

Die Erfindung wird nachstehend anhand eines Ausführungsbeispieles näher erläutert:
Gemäß nachstehender Tabelle wird eine konventionelle Holzwolle-Leichtbauplatte einer erfindungsgemäß gestalteten Bauplatte gegenübergestellt.

Die Platten haben jeweils eine Stärke von 25 mm. Alle Angaben sind Masseteile.

Die Platte nach dem Stand der Technik weist einen nach prEN ISO 1716 bestimmten PCS-Wert von 4,8 MJ/kg auf. Der PCS-Wert der erfindungsgemäßen Platte beträgt 2,9 MJ/kg. Damit erfüllt der erfindungsgemäße Baukörper die Brandschutzklasse A2 gemäß prEN 13501-1.

| Komponente | Stand der Technik | Erfindung |
|---|---|---|
| Holzwolle | 100 | 100 |
| MgO-Kauster | 190 | 320 |
| MgSO₄ | 30 | 35 |
| Mg(OH)₂ | 50 | 90 |
| Quarzsand | - | 75 |
| Summe | 370 | 620 |

Holzwollefasern werden auch Holzwollespäne genannt.

## Patentansprüche

1. Bauprodukt, das Holzwollefasern aufweist oder ein Bauprodukt mit einem substantiellen Bestandteil, der Holzwollefasern aufweist, wobei die Holzwollefasern eine Länge > 8 cm, eine Breite von 1-5 mm und eine Dicke von 0,2-0,5 mm aufweisen und untereinander mit einem anorganischen Bindemittel unter Ausbildung einer offenporigen Struktur verbunden sind und das Bauprodukt beziehungsweise sein substantieller Bestandteil neben Holzwollefasern und anorganischem Bindemittel mindestens einen, gegenüber dem anorganischen Bindemittel inerten Zuschlagstoff und/oder anorganischen Zuschlagstoff aufweist, wobei innerhalb der offenporigen Struktur das Masseverhältnis der Holzwollefasern zu 100 % minus Holzwollefasern größer 1:4,0 beträgt und das Bauprodukt und/oder der substantielle Bestandteil des Bauprodukts eine Brutto-Verbrennungswärme gemäß prEN ISO 1716 von < 3,0 MJ/kg aufweist.

2. Bauprodukt nach Anspruch 1, bei dem das Masseverhältnis Holzwollefasern zu 100 % minus Holzwollefasern >1:4,5 beträgt.

3. Bauprodukt nach Anspruch 1, bei dem das Masseverhältnis Holzwollefasern 100 % minus Holzwollefasern >1:5,0 beträgt.

4. Bauprodukt nach Anspruch 1, wobei der anorganische Zuschlagstoff ein Produkt aus der Gruppe: Quarzsand, geblähter Perlit, ungeblähter Perlit, geblähter Vermiculit, ungeblähter Vermiculit, Kalkstein, gebrannter Ton, gebrannte Tonminerale, Blähton ist.

5. Bauprodukt nach Anspruch 1, bei dem der inerte und/oder anorganische Zuschlagstoff in einer Körnung mit einem mittleren Durchmesser (d₅₀) < 1,0 mm vorliegt.

6. Bauprodukt nach Anspruch 1, bei dem inerte und/oder anorganische Zuschlagstoff in einer Körnung mit einem mittleren Durchmesser (d₅₀) < 0,5 mm vorliegt.

7. Bauprodukt nach Anspruch 1, das neben dem, Holzwollefasern enthaltenden substantiellen Bestandteil mindestens einen weiteren substantiellen Bestandteil umfasst.

8. Bauprodukt nach Anspruch 7, bei dem der weitere substantielle Bestandteil eine Zone aus Mineralfasern ist.

9. Bauprodukt nach Anspruch 1, das neben dem, Holzwollefasern enthaltenden substantiellen Bestandteil mindestens einen weiteren nicht substantiellen Bestandteil umfasst.

10. Bauprodukt nach Anspruch 9, bei dem der nicht substantielle Bestandteil mindestens eine Deck- oder Zwischenschicht aus einem Glasvlies ist.

## Claims

1. Building product which comprises wood wool fibres or a building product containing a substantial constituent which comprises wood wool fibres, wherein the wood wool fibres have a length > 8 cm, a width of 1-5 mm and a thickness of 0.2-0.5 mm and are joined to one another by an inorganic binder with the formation of an open-pore structure, and the building product or its substantial constituent comprises, apart from wood wool fibres and inorganic binder, at least one inorganic additive and/or additive inert with respect to the inorganic binder, wherein within the open-pore structure the weight ratio of the wood wool fibres to 100% minus wood wool fibres is greater than 1:4.0 and the building product and/or the substantial constituent of the building product has a gross calorific value according to prEN ISO 1716 of < 3.0 MJ/kg.

2. Building product according to claim 1, in which the weight ratio of wood wool fibres to 100% minus wood wool fibres is > 1:4.5.

3. Building product according to claim 1, in which the weight ratio of wood wool fibres to 100% minus wood wool fibres is > 1:5.0.

4. Building product according to claim 1, wherein the inorganic additive is a product from the group comprising quartz sand, expanded perlite, non-expanded perlite, expanded vermiculite, non-expanded vermiculite, limestone, calcined clay, calcined clay minerals, expanded clay.

5. Building product according to claim 1, in which the inert and/or inorganic additive is present in granular form with a mean diameter (d₅₀) < 1.0 mm.

6. Building product according to claim 1, in which the inert and/or inorganic additive is present in granular form with a mean diameter (d₅₀) < 0.5 mm.

7. Building product according to claim 1, which includes, apart from the substantial constituent containing wood wool fibres, also at least one further substantial constituent.

8. Building product according to claim 7, in which the further substantial constituent is a zone of mineral fibres.

9. Building product according to claim 1, which includes apart from the substantial constituent containing wood wool fibres, also at least one further non-substantial constituent.

10. Building product according to claim 9, in which the non-substantial constituent is at least one cover layer or intermediate layer of a glass fibre mat.

## Revendications

1. Produit de construction présentant des fibres de laine de bois ou produit de construction comprenant un composant substantiel qui présente des fibres de laine de bois, dans lequel les fibres de laine de bois ont une longueur de plus de 8 cm, une largeur allant de 1 à 5 mm et une épaisseur allant de 0,2 à 0,5 mm et sont liées entre elles au moyen d'un liant inorganique en formant une structure à pores ouverts et, outre les fibres de laine de bois et le liant inorganique, le produit de construction ou son composant substantiel présente au moins un additif inerte vis-à-vis du liant inorganique et/ou un additif inorganique, le rapport en masse des fibres de laine de bois sur 100 % moins les fibres de laine de bois dans la structure à pores ouverts étant supérieur à 1:4,0 et le produit de construction et/ou le composant substantiel du produit de construction présente un pouvoir calorifique brut suivant prEN ISO 1716 inférieur à 3,0 MJ/kg.

2. Produit de construction selon la revendication 1, dans lequel le rapport en masse des fibres de laine de bois sur 100 % moins les fibres de laine de bois est supérieur à 1:4,5.

3. Produit de construction selon la revendication 1, dans lequel le rapport en masse des fibres de laine de bois sur 100 % moins les fibres de laine de bois est supérieur à 1:5,0.

4. Produit de construction selon la revendication 1, dans lequel l'additif inorganique est un produit du groupe comprenant le sable silicieux, la perlite expansée, la perlite non expansée, la vermiculite expansée, la vermiculite non expansée, le calcaire, l'argile calcinée, des minéraux argileux calcinés, l'argile expansée.

5. Produit de construction selon la revendication 1, dans lequel l'additif inerte et/ou inorganique est présent avec une taille de grain dont le diamètre moyen (d₅₀) est inférieur à 1,0 mm.

6. Produit de construction selon la revendication 1, dans lequel l'additif inerte et/ou inorganique est présent avec une taille de grain dont le diamètre moyen (d₅₀) est inférieur à 0,5 mm.

7. Produit de construction selon la revendication 1, qui comprend au moins un autre composant substantiel en plus du composant substantiel contenant des fibres de laine de bois.

8. Produit de construction selon la revendication 7, dans lequel l'autre composant substantiel est une zone faite de fibres minérales.

9. Produit de construction selon la revendication 1, qui comprend au moins un autre composant non substantiel en plus du composant substantiel contenant des fibres de laine de bois.

10. Produit de construction selon la revendication 9, dans lequel le composant non substantiel est au moins une couche externe ou intermédiaire en mat de fibres de verre.
